(19) **Europäisches Patentamt**

**European Patent Office**

**Office européen des brevets**

(11) **EP 1 541 435 B1**

(12) **FASCICULE DE BREVET EUROPEEN**

(45) Date de publication et mention
de la délivrance du brevet:
**14.06.2006 Bulletin 2006/24**

(51) Int Cl.:
***B60T 8/00*** (2006.01)

(21) Numéro de dépôt: **04300767.3**

(22) Date de dépôt: **09.11.2004**

(54) **Procédé de contrôle de la décélération d'un véhicule à roues, utilisant des couples de freinage répartis à dissymétrie bornée.**

Verfahren zur Verzögerungsregelung eines Fahrzeugs unter Begrenzung unsymmetrisch verteilter Bremsmomente

Vehicle deceleration control method using braking torques distributed in a limited asymmetric way

(84) Etats contractants désignés:
**AT BE BG CH CY CZ DE DK EE ES FI GB GR HU IE IS IT LI LU MC NL PL PT RO SE SI SK TR**

(30) Priorité: **13.11.2003 FR 0313306**

(43) Date de publication de la demande:
**15.06.2005 Bulletin 2005/24**

(73) Titulaire: **Renault s.a.s.**
**92100 Boulogne Billancourt (FR)**

(72) Inventeurs:
• **Berthoud, Yann**
**94300, Vincennes (FR)**
• **Dupuis, Bruno**
**27600, Fontaine Bellenger (FR)**
• **Pothin, Richard**
**92420, Vaucresson (FR)**
• **Vourch, Géraldine**
**78960, Voisins le Bretonneux (FR)**

(74) Mandataire: **Davies, Owen Robert Treharne**
**RENAULT TECHNOCENTRE**
**Département Propriété Intellectuelle**
**Sce 00267 TCR GRA 2 36**
**1, avenue du Golf**
**78288 Guyancourt cedex (FR)**

(56) Documents cités:
**EP-A- 1 302 379**       **DE-A- 4 321 571**
**FR-A- 2 775 237**

**Description**

L'invention concerne, de façon générale, les techniques de freinage et de contrôle de stabilité des véhicules terrestres.

Plus précisément, l'invention concerne un procédé de contrôle de la décélération d'un véhicule à plusieurs roues en fonction d'une consigne de freinage émanant par exemple d'un conducteur de ce véhicule, ce procédé comprenant des opérations consistant à évaluer au moins la charge verticale instantanée appliquée sur chaque roue en fonction d'un état dynamique instantané du véhicule, et à appliquer aux roues du véhicule des couples de freinage individuels instantanés respectifs répondant au moins à une première contrainte imposant que la somme des couples individuels de freinage corresponde à la consigne de freinage, et à une deuxième contrainte imposant que le couple de freinage individuel appliqué sur chaque roue suive une loi croissante en fonction de la charge verticale instantanée appliquée sur cette roue.

Un procédé de ce type est connu du brevet FR - 2 775 237 de la demanderesse.

Pour un véhicule à quatre roues, ce procédé consiste à traduire la consigne de décélération émanant du conducteur en quatre consignes de freinage réparties sur les quatre roues de façon à toujours obtenir un niveau d'adhérence équivalent sur les quatre pneumatiques correspondants.

La stratégie de répartition tient compte de l'estimation de la charge verticale appliquée à chaque roue et de l'estimation du potentiel d'adhérence latérale utilisé.

En ligne droite, cette stratégie se réduit à l'exploitation de la parabole d'équipotentiel longitudinal bien connue de l'homme du métier.

Avec une telle répartition, les freins arrière sont donc plus exploités dans les phases de freinage «de confort» comparativement aux systèmes hydrauliques classiques actuels, ce qui permet d'atténuer la plongée du véhicule et d'améliorer notablement le confort de freinage en fonction de la géométrie des trains des véhicules concernés.

En virage, le report de charge latéral conduit à freiner davantage les roues extérieures au virage que les roues intérieures au virage, ce qui crée un moment de lacet s'opposant au survirage naturel provoqué par le délestage du train arrière.

La stabilité est ainsi améliorée dans les phases critiques de forte accélération transversale et faible décélération longitudinale.

En manoeuvre d'évitement, la répartition des forces latérales, qui joue sur la répartition de freinage, permet de diminuer la dérive du véhicule, d'améliorer la maniabilité du véhicule et de réduire nettement l'activité conducteur au volant.

Le moment de lacet créé par la dissymétrie de freinage entre les roues extérieures et les roues intérieures a, dans une certaine mesure, un effet stabilisateur et permet au véhicule de rester plus longtemps sur la trajectoire dans les freinages en courbe.

Cependant, certains véhicules dotés de châssis relativement sous-vireurs ou circulant à pleine charge ont très peu tendance, dans des situations de freinage en courbe, à rentrer à l'intérieur de la courbe.

Dans ces cas, le moment de lacet créé par la répartition de freinage sur les différentes roues a tendance à amener ces véhicules à l'extérieur de la trajectoire en début de freinage, ce qui peut devenir perturbant pour le conducteur.

L'invention, qui se situe dans ce contexte, a pour but principal de proposer un procédé exempt du défaut précédemment mentionné.

A cette fin, le procédé de l'invention, par ailleurs conforme à la définition générique qu'en donne le préambule ci-dessus, est essentiellement caractérisé en ce qu'il comprend au moins une opération supplémentaire, conditionnellement mise en oeuvre lors de la décélération du véhicule dans un virage, et consistant à plafonner ladite loi croissante par une limite de dissymétrie des couples de freinage respectivement appliqués sur les roues du véhicule externes au freinage et sur les roues du véhicule internes au freinage.

D'autres caractéristiques et avantages de l'invention ressortiront clairement de la description qui en est faite ci-après, à titre indicatif et nullement limitatif, en référence aux dessins annexés, dans lesquels :

- la figure 1 est un diagramme général illustrant la place de la fonction de répartition des couples de freinage au sein des autres fonctions de freinage;

- la figure 2 est un diagramme représentant schématiquement la structure opérationnelle d'un premier mode de réalisation possible du procédé de l'invention; et

- la figure 3 est un diagramme représentant schématiquement la structure opérationnelle d'un second mode de réalisation possible du procédé de l'invention.

Comme annoncé précédemment, l'invention concerne un procédé de contrôle de la décélération d'un véhicule à plusieurs roues en fonction d'une consigne de freinage émanant généralement du conducteur de ce véhicule.

Ce procédé est particulièrement bien adapté aux systèmes de freinage à commande découplée, tels que ceux connus de l'homme du métier sous les acronymes EMB et EHB.

L'invention s'intègre dans un système global dont l'architecture matérielle comprend au moins un dispositif de pilotage des freins, un ou plusieurs moyens électroniques de calcul, et un ou plusieurs capteurs permettant la mesure de la vitesse instantanée du véhicule et l'estimation ou la mesure de l'accélération longitudinale, de l'angle de rotation du volant, de 1.'accélération transversale, et de la vitesse de lacet.

Les véhicules équipés de systèmes de freinage conventionnels présentent des risques d'instabilité dans certaines situations de freinage.

Ces risques sont aujourd'hui écartés au moyen de systèmes électroniques de freinage intégrés qui adoptent des compromis sur la répartition des couples de freinage entre les roues avant et les roues arrière en ligne droite ainsi qu'entre les roues droites et les roues gauches en courbe, en limitant la pression sur les roues qui présentent un fort glissement.

Ces compromis peuvent entraîner un non-respect de la consigne de décélération émanant du conducteur, la stabilité et la maniabilité du véhicule dans certaines situations de manoeuvres en courbe ou en changement de file pouvant également rester critiques.

L'invention a pour objectif général d'établir une répartition des efforts de freinage sur les roues du véhicule de façon à optimiser en permanence le potentiel de freinage et la capacité de guidage sur ces roues, et améliorer ainsi la stabilité et la maniabilité du véhicule tout en respectant la consigne de décélération du conducteur.

Comme décrit dans le brevet FR - 2 775 237 précité, le procédé de l'invention comprend ainsi des opérations qui consistent à évaluer au moins la charge verticale instantanée appliquée sur chaque roue du véhicule en fonction de l'état dynamique instantané de ce véhicule, et à appliquer à ces roues des couples de freinage individuels instantanés respectifs déterminés.

Plus concrètement, ces couples de freinage sont déterminés pour répondre au moins à une première contrainte, qui impose que la somme des couples individuels de freinage corresponde à la consigne de freinage, et à une deuxième contrainte, qui impose que le couple de freinage individuel appliqué sur chaque roue suive une loi croissante en fonction de la charge verticale instantanée appliquée sur cette roue.

Cette fonction de répartition agit dès l'actionnement de la pédale de frein et permet, en répartissant le freinage de façon à obtenir le même niveau d'adhérence sur les pneumatiques des différentes roues, de repousser les limites de déclenchement des systèmes de sécurité tels que l'ABS et l'ESP.

Pour les conducteurs très peu ou pas du tout habitués à déclencher ces systèmes palliatifs, la régulation du couple de freinage entraîne généralement un effet de surprise, et il peut arriver que le conducteur relâche alors son pied de sa pédale de frein, même en situation d'urgence.

En exploitant au maximum le potentiel de freinage du véhicule, l'optimisation de la répartition des couples de freinage sur les différentes roues de ce véhicule réduit considérablement la probabilité de déclenchement des systèmes palliatifs, et réduit donc d'autant le risque de surprendre le conducteur par une régulation de freinage.

Selon un premier de ses aspects caractéristiques, le procédé de l'invention comprend une opération supplémentaire, qui est conditionnellement mise en oeuvre lors de la décélération du véhicule dans un virage, et qui consiste à plafonner la loi croissante précitée par une limite de dissymétrie des couples de freinage respectivement appliqués sur les roues du véhicule externes au freinage et sur les roues du véhicule internes au freinage.

La limite de dissymétrie est calculée au moyen d'un premier paramètre de valeur réglable, noté $\alpha$, qui opère une réduction du moment de lacet du véhicule proportionnelle à sa valeur, et qui permet de saturer le moment de lacet à une certaine valeur.

Cette limite de dissymétrie est de préférence calculée en prenant également en compte un second paramètre de valeur réglable, noté $\beta$, qui opère une répartition entre les roues avant et arrière du véhicule de la limite de dissymétrie des couples de freinage.

La charge verticale instantanée appliquée sur chaque roue est évaluée au moins à partir des accélérations longitudinale et transversale du véhicule, en prenant en compte la charge statique du véhicule et des reports de charge dynamiques longitudinaux et transversaux.

L'accélération longitudinale du véhicule et / ou son accélération transversale peuvent être constituées ou dérivées d'un signal de mesure délivré par un capteur et de préférence soumis à un filtrage.

Cependant, l'accélération longitudinale du véhicule peut aussi estimée à partir d'une mesure de la vitesse instantanée du véhicule, l'accélération transversale du véhicule pouvant quant à elle être estimée à partir d'une mesure de la vitesse instantanée du véhicule et d'une mesure d'un angle de rotation du volant de ce véhicule.

Dans le cas où l'une et / ou l'autre des accélérations longitudinale et transversale du véhicule est estimée, elle peut l'être au moyen d'un observateur qui prend en compte la consigne de freinage, qui produit une valeur estimée de l'accélération du véhicule liée à une valeur estimée de la vitesse du véhicule, et qui corrige la valeur estimée de l'accélération du véhicule en fonction de la différence entre la valeur estimée et la valeur mesurée de la vitesse instantanée du véhicule.

Chacune des accélérations longitudinale et transversale du véhicule peut aussi être à la fois estimée et mesurée, de sorte que les valeurs estimée et mesurée de cette accélération peuvent être comparées l'une à l'autre pour vérifier la qualité de fonctionnement du capteur.

De manière avantageuse, les charges verticales instantanées appliquées sur les différentes roues du véhicule sont, après évaluation, corrigées au moyen de coefficients de sécurité respectifs, notés $\eta_{ij}$, ces coefficients de sécurité étant choisis pour privilégier les couples de freinage appliqués aux roues avant par rapport aux couples de freinage appliqués aux roues arrière, et pour privilégier les couples de freinage appliqués aux roues intérieures à un virage par rapport aux couples de freinage appliqués aux roues extérieures à ce virage.

En d'autres termes, la stratégie de freinage prend ainsi en compte des marges de sécurité longitudinale et transversale $\eta_{ij}$ qui permettent de garantir, au moins dans la plupart des cas, que l'ordre d'entrée des roues en régime de régulation de freinage respecte la double hiérarchie roues avant / roues arrière et roues intérieures / roues extérieures.

En effet, dans le cas d'une répartition totalement optimale des couples de freinage, toutes les roues du véhicule devraient entrer simultanément en phase de blocage et déclencher en même temps une régulation ABS. Cependant, en raison des erreurs d'estimation, la répartition des couples de freinage risquerait de conduire à amorcer le blocage en premier lieu sur les roues extérieures. Or, dans la mesure où les roues extérieures sont les roues les plus chargées et offrent le plus grand pouvoir directionnel, le relâchement de l'effort de freinage dû à la régulation ABS sur la roue avant extérieure entraînerait une déstabilisation du véhicule.

Les marges de sécurité longitudinale et transversale, qui privilégient l'ordre souhaité d'entrée des roues en régulation, permettent d'éviter cette déstabilisation.

Dans le mode de réalisation le plus élaboré de l'invention, les couples de freinage individuels instantanés respectivement appliqués aux différentes roues du véhicule sont déterminés en prenant en compte non seulement les charges verticales instantanées respectivement appliquées sur les différentes roues comme c'est le cas dans le mode de réalisation le plus simple de l'invention, mais également les forces latérales auxquelles ces roues sont respectivement soumises.

Ces deux modes de réalisation seront maintenant décrits de façon totalement formelle, en utilisant les conventions d'écriture suivantes.

$V_x, V_y$     vitesse tangentielle et centripète du véhicule

$a_t$     accélération tangentielle

$a_c$     accélération centripète

$a_z$     accélération verticale

$\psi$     angle de lacet

$I_x$     inertie en rotation selon l'angle $X$

$F_{x_w}$     force longitudinale à la roue : projection de la réaction du sol sur la roue selon l'axe longitudinal de la roue

$F_{y_w}$     force transversale à la roue : projection de la réaction du sol sur la roue selon l'axe transversal de la roue.

$F_{z_w}$     force verticale à la roue : projection de la réaction du sol sur la roue selon l'axe vertical de la roue.

$$\mu_x = \frac{F_x}{F_z}$$     potentiel de freinage en négligeant les efforts latéraux

$$\mu = \frac{\sqrt{F_x^2 + \rho F_Y^2}}{F_z}$$     potentiel de freinage en prenant en compte les efforts latéraux

$M$     sans indice masse du véhicule, indicée 1 masse sur le train avant, indicée 2 masse sur le train arrière

$L$     empattement (= $L_1 + L_2$)

$L_1, L_2$     distance du centre de gravité aux trains avant et arrière

$b_1, b_2$     voies avant et arrière

$\delta$     angle de braquage du pneu

$\delta_v$     angle de braquage du volant

$\beta$     angle de dérive du véhicule

$$D = -\frac{\partial F_{Y_W}}{\partial \alpha}$$     raideur de dérive du pneu ou du train (ainsi définie, la raideur de dérive est positive)

$$d = \frac{D}{F_{z_W}}$$ raideur de dérive normalisée

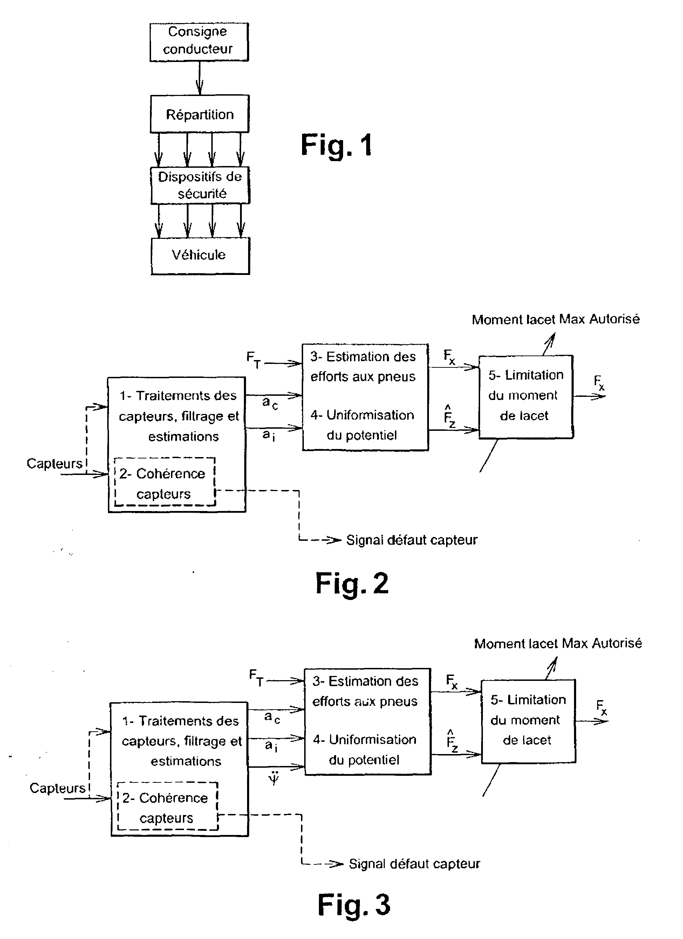

*demul* démultiplication de la direction
*i, j* indice des roues, le premier indice signifie avant/arriére, le second gauche/droite.
Par exemple 1,1 signifie roue avant gauche et 2,1 signifie roue arrière gauche.
Le module fonctionnel de répartition des couples de freinage intervient dans la commande de freinage au sein des autres fonctions comme indiqué à la Figure 1. Ce module reçoit en entrée la consigne de freinage émanant du conducteur, et délivre en sorties quatre commandes de force de freinage, se transformant en couples de freinage susceptibles d'être modifiés par les dispositifs de sécurité tels que l'ABS et l'ESP.
Les principales étapes mises en oeuvre dans ce module fonctionnel sont:

A. Filtrage des signaux de mesure issus des capteurs.
B. Vérification de la cohérence des signaux de mesure issus des capteurs.
C. Estimation des efforts verticaux appliqués aux différentes roues.
D. Calcul des efforts de freinage en uniformisant le potentiel de freinage.
E. Limitation du moment de lacet engendré.

## 1 . PREMIER MODE DE REALISATION

Le premier mode de réalisation, qui est illustré à la figure 2 et qui ne prend pas en compte les forces latérales s'appliquant respectivement aux différentes roues, est le plus simple.

## A. Filtrage des signaux de mesure issus des capteurs

L'objectif de cette sous-fonction est de fournir des signaux filtrés d'accélération transversale et d'accélération longitudinale.

## a. Accélération transversale

Plusieurs solutions peuvent être envisagées en fonction des capteurs disponibles, à savoir:

- mesure directe avec un accéléromètre transversal, puis filtrage par un filtre passe-bas, ou

- estimation par un modèle du véhicule à partir de la vitesse du véhicule et de l'angle de rotation du volant, ou d'autres signaux.

*Exemple d'estimation*:

12
L'accélération transversale est estimée par un modèle deux roues du véhicule (cf. équations 1).
Pour cela le modèle utilise l'angle de rotation du volant et la vitesse du véhicule selon les équations suivantes (Equations 1):

$$\frac{\partial}{\partial t}\begin{bmatrix} \dot{\psi} \\ \beta \end{bmatrix} = \begin{pmatrix} -\dfrac{D_1 L_1^2 + D_2 L_2^2}{V I_\psi} & \dfrac{D_2 L_2 - D_1 L_1}{I_\psi} \\ -1 + \dfrac{D_2 L_2 - D_1 L_1}{M V^2} & -\dfrac{D_1 + D_2}{M V} \end{pmatrix}\begin{bmatrix} \dot{\psi} \\ \beta \end{bmatrix} + \begin{pmatrix} \dfrac{D_1 L_1}{I_\psi} \\ \dfrac{D_1}{M V} \end{pmatrix}\dfrac{\delta_V}{demul}$$

$$a_c = \begin{pmatrix} \dfrac{D_2 L_2 - D_1 L_1}{M V} & -\dfrac{D_1 + D_2}{M} \end{pmatrix}\begin{bmatrix} \dot{\psi} \\ \beta \end{bmatrix} + \dfrac{D_1}{M}\dfrac{\delta_V}{demul}$$

**b. Accélération longitudinale**

Plusieurs solutions peuvent être envisagées en fonction des capteurs disponibles, à savoir:

- mesure directe avec un accéléromètre longitudinal, puis filtrage par un filtre passe-bas, ou

- estimation à partir de la vitesse du véhicule ou d'autres signaux.

*Exemple d'estimation:*

L'accélération longitudinale est estimée par un observateur à partir de la vitesse du véhicule et de la consigne de freinage du conducteur selon le principe suivant:

La consigne conducteur donne une première estimation $a_{tm}$ de l'accélération. On introduit la variable $\varepsilon$ qui modélise l'erreur de modélisation (masse etc.) :

$$\dot{\hat{V}}_x = a_{tm} + \varepsilon + k_1 (V_x - \hat{V}_x)$$

$$\dot{\varepsilon} = k_2 (V_x - \hat{V}_x)$$

$$Et\ \hat{a}_t = a_{tm} + \varepsilon.$$

Les paramètres $k_1$ et $k_2$ sont des paramètres dont les valeurs peuvent être choisies pour optimiser le compromis à faire entre la rapidité de la dérivation et la sensibilité au bruit de la valeur d'accélération trouvée.

La première estimation $a_{tm}$ est obtenue en divisant la consigne de freinage du conducteur notée Consigne_ Freinage par la masse maximale du véhicule notée Masse_Max. En effet il est préférable de sous-estimer le signal de manière à ne pas surestimer le report de charge.

$$a_{tm}\ =\ Consigne\_Freinage\ /\ Masse\_Max.$$

**B. Vérification de la cohérence des signaux de mesure issus des capteurs**

Si les mesures de l'angle de rotation du volant, de la vitesse du véhicule et de ses accélérations sont disponibles, il est possible de vérifier la cohérence des capteurs en comparant les signaux des accéléromètres avec les accélérations estimées par le modèle deux roues et par l'observateur.

En cas de détection d'une incohérence, un mode dégradé de la répartition des couples de freinage est mis en oeuvre. Le mode dégradé peut consister par exemple en une répartition symétrique gauche / droite selon une parabole d'équi-adhérence.

**C. Estimation des efforts verticaux**

Les efforts verticaux, ou charges exercées verticalement sur chacune des roues, sont estimés en prenant en compte la charge statique du véhicule et les reports de charge dynamiques longitudinaux et latéraux selon les équations suivantes (Equations 2).

$$F_{z11} = -\frac{K_1}{b_1} hMa_c - \frac{hMa_t}{2L} + \frac{L_2 Mg}{2L}$$

6

$$F_{z12} = +\frac{K_1}{b_1} hMa_c - \frac{hMa_t}{2L} + \frac{L_2 Mg}{2L}$$

$$F_{z21} = -\frac{K_2}{b_2} hMa_c + \frac{hMa_t}{2L} + \frac{L_1 Mg}{2L}$$

$$F_{z22} = +\frac{K_2}{b_2} hMa_c + \frac{hMa_t}{2L} + \frac{L_1 Mg}{2L}$$

**D. Calcul des efforts de freinage en uniformisant le potentiel**

La répartition des efforts ou couples de freinage doit satisfaire aux objectifs suivants:

- pour chaque roue ij le potentiel de freinage, défini par le rapport de l'effort longitudinal sur l'effort vertical, est égal à $\eta_{ij}\,\mu$ où $\mu$ est un potentiel de freinage voisin de celui des quatre roues et $\eta_{ij}$ est un coefficient proche de 1 qui permet de régler une petite différence de potentiel entre les roues intérieures et les roues extérieures au virage et entre les roues avant et les roues arrière de façon à s'assurer que les roues avant bloqueront avant les roues arrière et que les roues intérieures bloqueront avant les roues extérieures, et

- le freinage total doit être égal à la consigne du conducteur $F_T$.

Cette répartition doit donc satisfaire aux équations suivantes (Equations 3):

$$F_{xij} = \eta_{ij}\,\mu F_{zij}$$

$$\sum F_{xij} = F_T$$

La résolution de ces équations donne la répartition de freinage suivante (Equation 4):

$$F_{xij} = F_T \frac{\eta_{ij} F_{zij}}{\sum \eta_{ij} F_{zij}}$$

**E. Limitation du moment de lacet produit**

L'optimisation des potentiels de freinage conduit généralement à freiner plus fort sur les roues extérieures au virage, qui sont les plus chargées. L'optimisation des potentiels de freinage est donc souvent à l'origine d'un moment de lacet $M_{Fx}$ dû à l'asymétrie des forces de freinage.

Ce moment de lacet doit être contrôlé pour qu'il ne dépasse pas une valeur maximale $M_{Fxmax}$ considérée comme perturbant pour le conducteur. Cette valeur peut varier selon la situation de conduite. Pour limiter le moment de lacet à une plage de valeurs acceptable, il faut diminuer l'asymétrie du freinage. Cette diminution se traduit par une diminution des efforts de freinage pour certaines roues et une augmentation pour les autres. Ainsi certains potentiels vont être améliorés et d'autres vont être dégradés.

La répartition de freinage est donc modifiée en diminuant l'asymétrie du freinage au moyen d'un coefficient $\alpha$. Ce coefficient $\alpha$ est calculé pour limiter le moment de lacet à la valeur maximale autorisée.

La diminution d'asymétrie est répartie entre l'avant et l'arrière au moyen d'un coefficient $\beta$. Ce coefficient P est calculé de façon à limiter le plus possible la plus grande augmentation de potentiel de freinage.

Il en résulte que les forces de freinage sur les différentes roues sont définies par les équations ci-dessous (Equations 5), dans lesquelles le signe du paramètre α est choisi en fonction du signe de l'angle δy de rotation du volant.

$$F_{X11\,lim} = F_{X11} + \frac{\alpha\beta}{2}$$

$$F_{X12\,lim} = F_{X12} + \frac{\alpha\beta}{2}$$

$$F_{X21\,lim} = F_{X21} + \frac{1}{2}\alpha\left(1 - \beta\frac{b_1}{b_2}\right)$$

$$F_{X22\,lim} = F_{X22} - \frac{1}{2}\alpha\left(1 - \beta\frac{b_1}{b_2}\right)$$

Ainsi défini, le coefficient α permet de limiter le moment de lacet, comme le montrent les équations suivantes.

$$
\begin{aligned}
M_{FX\,lim} &= \frac{b_1}{2}(F_{X12\,lim} - F_{X11\,lim}) + \frac{b_2}{2}(F_{X22\,lim} - F_{X21\,lim}) \\
&= \frac{b_1}{2}(F_{X12} - F_{X11} - \alpha\beta) + \frac{b_2}{2}\left(F_{X22} - F_{X21} - \alpha\left(1 - \beta\frac{b_1}{b_2}\right)\right) \\
&= \underbrace{\frac{b_1}{2}(F_{X12} - F_{X11}) + \frac{b_2}{2}(F_{X22} - F_{X21})}_{M_{FX}} - \frac{b_2}{2}\alpha
\end{aligned}
$$

## II. DEUXIEME MODE DE REALISATION

Le deuxième mode de réalisation, qui est illustré à la figure 3 et qui prend en compte les forces latérales s'appliquant respectivement aux différentes roues, est le plus complet et le plus précis.

La structure du procédé selon ce second mode de réalisation est identique à celle du procédé selon le premier mode de réalisation, seules les parties A, C et D étant modifiées en A', C' et D'.

### A'. Filtrage des signaux issus des capteurs et estimations

L'objectif de cette sous-fonction est de fournir des signaux filtrés d'accélération transversale, d'accélération longitudinale et d'accélération de lacet. En ce qui concerne les deux premières, la solution est celle décrite dans la partie précédente relative au premier mode de réalisation.

L'accélération de lacet peut quant à elle être obtenue de plusieurs façons, à savoir:

- dérivation de la mesure directe de la vitesse de lacet, puis filtrage par un filtre passe-bas, ou

- estimation par un modèle du véhicule à partir de la vitesse du véhicule et de l'angle de rotation du volant ou d'autres signaux.

Exemple d'estimation:

L'accélération de lacet est estimée par un modèle deux roues du véhicule (cf. Équation 1).

Pour cela le modèle utilise l'angle volant et la vitesse du véhicule selon les équations suivantes:

$$
\frac{\partial}{\partial t}\begin{bmatrix} \dot{\psi} \\ \beta \end{bmatrix} = \begin{pmatrix} -\dfrac{D_1 L_1^2 + D_2 L_2^2}{V I_\psi} & \dfrac{D_2 L_2 - D_1 L_1}{I_\psi} \\ -1 + \dfrac{D_2 L_2 - D_1 L_1}{M V^2} & -\dfrac{D_1 + D_2}{M V} \end{pmatrix} \begin{bmatrix} \dot{\psi} \\ \beta \end{bmatrix} + \begin{pmatrix} \dfrac{D_1 L_1}{I_\psi} \\ \dfrac{D_1}{M V} \end{pmatrix} \frac{\delta_v}{demul}
$$

$$
\begin{bmatrix} \ddot{\psi} \\ a_c \end{bmatrix} = \begin{pmatrix} -\dfrac{D_1 L_1^2 + D_2 L_2^2}{V I_\psi} & \dfrac{D_2 L_2 - D_1 L_1}{I_\psi} \\ \dfrac{D_2 L_2 - D_1 L_1}{M V} & -\dfrac{D_1 + D_2}{M} \end{pmatrix} \begin{bmatrix} \dot{\psi} \\ \beta \end{bmatrix} + \begin{pmatrix} \dfrac{D_1 L_1}{I_\psi} \\ \dfrac{D_1}{M} \end{pmatrix} \frac{\delta_v}{demul}
$$

## C'. Estimation des efforts verticaux et latéraux

L'opération d'estimation des efforts verticaux est décrite dans la partie précédente relative au premier mode de réalisation.

Les efforts latéraux sont quant à eux estimés à partir de l'accélération transversale, de l'accélération de lacet et des raideurs de dérive D, selon les équations suivantes (Equations 7).

$$
F_{Y_w 11} = D_{11} \frac{M L_2 a_c + I_\psi \ddot{\psi}}{L(D_{11} + D_{12})}
$$

$$
F_{Y_w 12} = D_{12} \frac{M L_2 a_c + I_\psi \ddot{\psi}}{L(D_{11} + D_{12})}
$$

$$
F_{Y_w 21} = D_{21} \frac{M L_1 a_c - I_\psi \ddot{\psi}}{L(D_{21} + D_{22})}
$$

$$
F_{Y_w 22} = D_{22} \frac{M L_1 a_c - I_\psi \ddot{\psi}}{L(D_{21} + D_{22})}
$$

## D'. Calcul des efforts de freinage en uniformisant le potentiel

La répartition de freinage doit satisfaire aux objectifs suivants:

- pour chaque roue ij le potentiel de freinage, défini par le rapport de la norme de l'effort dans le plan (x,y) sur l'effort vertical, est égal à $\eta_{ij}\mu$ où $\mu$ est un potentiel de freinage voisin de celui des quatre roues et $\eta_{ij}$ est un coefficient proche de 1 qui permet de régler une petite différence de potentiel entre les roues intérieures et les roues extérieures au virage et entre les roues avant et les roues arrière, de façon à s'assurer que les roues avant bloqueront avant les roues arrière et que les roues intérieures bloqueront avant les roues extérieures, et

- le freinage total doit être égal à la consigne du conducteur $F_\mathsf{T}$.

Etant donnés des efforts latéraux et verticaux $F_{\mathsf{Y}\,i\,j}$ et $F_{\mathsf{Z}ij}$ et une force de freinage totale égale à $F_\mathsf{T}$, le freinage équipotentiel de potentiel $\mu$ est donné par les équations suivantes:

$$\sqrt{\eta_{ij}^2 \mu_{xij}^2 + \frac{\mu_{x\max}^2}{\mu_{y\max}^2} \mu_{yij}^2} = \mu$$

$$\sum \eta_{ij} \mu_{xij} F_{zij} = F_T$$

où $\mu_{\mathsf{xmax}}$ et $\mu_{\mathsf{ymax}}$ sont les dimensions de l'ellipse d'adhérence dont le contour délimite pour une adhérence donnée la zone d'adhérence de la zone de blocage.

Il s'agit donc de trouver un $\mu$ vérifiant l'équation suivante:

$$\sum \sqrt{\mu^2 - \frac{\mu_{x\max}^2}{\mu_{y\max}^2} \eta_{ij}^2 \mu_{yij}^2} \, F_{zij} = F_T$$

Cette équation n'a pas toujours de solution. En effet si la force de freinage $F_\mathsf{T}$ est suffisamment faible et s'il existe des potentiels latéraux non homogènes, alors il se peut que l'on n'ait pas besoin de freiner une ou plusieurs roues qui sont déjà soumises à des efforts latéraux importants. Autrement dit, alors qu'on cherche à avoir des potentiels sensiblement égaux, il se peut qu'une ou plusieurs roues présentent, du seul fait des efforts latéraux auxquels elles sont soumises, un potentiel supérieur à la valeur commune recherchée.

La décélération est alors obtenue en freinant uniquement sur les autres roues, sans intervention sur la ou les roues dont le potentiel est déjà largement utilisé latéralement.

Une solution pour traiter tous les cas de manière continue peut être obtenue de la façon suivante.

Le problème étant de trouver un potentiel $\mu$. vérifiant les équations suivantes:

$$\sum \sqrt{\max(\mu^2 - \frac{\mu_{x\max}^2}{\mu_{y\max}^2} \eta_{ij}^2 \mu_{yij}^2, 0)} \, F_{zij} = F_T$$

$$F_{xij} = \sqrt{\max(\mu^2 - \frac{\mu_{x\max}^2}{\mu_{y\max}^2} \eta_{ij}^2 \mu_{yij}^2, 0)} \, F_{zij}$$

la solution à ce problème consiste à calculer le potentiel $\mu$ comme la valeur qui annule la fonction :

$$f(\mu) = \sum \sqrt{\max(\eta_{ij}^2 \mu^2 F_{zij}^2 - \rho F_{zij}^2, 0)} - F_T$$

où ρ représente le coefficient de dissymétrie du pneumatique équipant la roue considérée, c'est-à-dire le rapport de la force longitudinale à la force transversale de frottement de ce pneumatique sur la voie de circulation.

**Revendications**

1. Procédé de contrôle de la décélération d'un véhicule à plusieurs roues en fonction d'une consigne de freinage ($F_T$) émanant par exemple d'un conducteur de ce véhicule, ce procédé comprenant des opérations consistant à évaluer au moins la charge verticale instantanée ($F_{Zij}$) appliquée sur chaque roue en fonction d'un état dynamique instantané du véhicule, et à appliquer aux roues du véhicule des couples de freinage individuels instantanés respectifs répondant au moins à une première contrainte imposant que la somme des couples individuels de freinage corresponde à la consigne de freinage, et à une deuxième contrainte imposant que le couple de freinage individuel appliqué sur chaque roue suive une loi croissante en fonction de la charge verticale instantanée appliquée sur cette roue, **caractérisé en ce qu'**il comprend au moins une opération supplémentaire, conditionnellement mise en oeuvre lors de la décélération du véhicule dans un virage, et consistant à plafonner ladite loi croissante par une limite de dissymétrie des couples de freinage respectivement appliqués sur les roues du véhicule externes au freinage et sur les roues du véhicule internes au freinage.

2. Procédé suivant la revendication 1, **caractérisé en ce que** la limite de dissymétrie est calculée au moyen d'un premier paramètre (α) de valeur réglable, opérant une réduction du moment de lacet du véhicule proportionnelle à la valeur de ce premier paramètre.

3. Procédé suivant la revendication 2, **caractérisé en ce que** la limite de dissymétrie est calculée en prenant également en compte un second paramètre (β) de valeur réglable opérant une répartition entre les roues avant et arrière du véhicule de la limite de dissymétrie des couples de freinage.

4. Procédé suivant l'une quelconque des revendications précédentes, **caractérisé en ce que** la charge verticale instantanée appliquée sur chaque roue est évaluée au moins à partir des accélérations longitudinale et transversale du véhicule, en prenant en compte la charge statique du véhicule et des reports de charge dynamiques longitudinaux et transversaux.

5. Procédé suivant la revendication 4, **caractérisé en ce que** l'une au moins des accélérations longitudinale et transversale du véhicule est constituée ou dérivée d'un signal de mesure délivré par un capteur.

6. Procédé suivant l'une quelconque des revendications 4 et 5, **caractérisé en ce que** l'accélération longitudinale du véhicule est estimée à partir d'une mesure de la vitesse instantanée du véhicule.

7. Procédé suivant l'une quelconque des revendications 4 à 6, **caractérisé en ce que** l'accélération transversale du véhicule est estimée à partir d'une mesure de la vitesse instantanée du véhicule et d'une mesure d'un angle de rotation du volant de ce véhicule.

8. Procédé suivant l'une quelconque des revendications 6 et 7, **caractérisé en ce que** l'une au moins des accélérations longitudinale et transversale du véhicule est estimée au moyen d'un observateur prenant en compte la consigne de freinage, produisant une valeur estimée de l'accélération du véhicule liée à une valeur estimée de la vitesse du véhicule, et corrigeant la valeur estimée de l'accélération du véhicule en fonction d'une différence entre la valeur estimée et la valeur mesurée de la vitesse instantanée du véhicule.

9. Procédé suivant la revendication 5 combinée à l'une quelconque des revendications 6 et 7, **caractérisé en ce que** l'une au moins des accélérations longitudinale et transversale du véhicule est à la fois estimée et mesurée, et **en ce que** les valeurs estimée et mesurée de cette accélération sont comparées pour vérifier le fonctionnement du capteur.

10. Procédé suivant l'une quelconque des revendications précédentes, **caractérisé en ce que** les charges verticales instantanées appliquées sur les différentes roues du véhicule sont, après évaluation, corrigées au moyen de coefficients de sécurité respectifs, choisis pour privilégier les couples de freinage appliqués aux roues avant par rapport aux couples de freinage appliqués aux roues arrière, et pour privilégier les couples de freinage appliqués aux roues intérieures à un virage par rapport aux couples de freinage appliqués aux roues extérieures à ce virage.

**11.** Procédé suivant l'une quelconque des revendications précédentes, **caractérisé en ce que** les couples de freinage individuels instantanés respectivement appliqués aux différentes roues du véhicule sont déterminés en prenant également en compte les forces latérales auxquelles ces roues sont respectivement soumises.

**12.** Procédé suivant l'une quelconque des revendications précédentes combinée à la revendication 5, **caractérisé en ce que** l'une au moins des accélérations longitudinale et transversale du véhicule est obtenue par filtrage du signal de mesure délivré par le capteur.

**Claims**

**1.** A method of controlling the deceleration of a vehicle with a plurality of wheels as a function of a braking reference ($F_T$) supplied, for instance, by a driver of this vehicle, which method comprises operations to evaluate at least the instantaneous vertical load ($F_{zij}$) applied to each wheel as a function of an instantaneous dynamic state of the vehicle, and to apply to the vehicle wheels respective instantaneous individual braking torques meeting at least a first constraint according to which the sum of the individual braking torques must correspond to the braking reference, and a second constraint according to which the individual braking torque applied to each wheel must follow an increasing law as a function of the instantaneous vertical load applied to this wheel, **characterised in that** it comprises at least one supplementary operation, applied conditionally upon the deceleration of the vehicle on a bend, and consisting in capping this increasing law by means of a dissymmetry limit of the braking torques applied respectively to the outer vehicle wheels during braking and to the inner vehicle wheels during braking.

**2.** A method as claimed in claim 1, **characterised in that** the dissymmetry limit is calculated by means of a first parameter ($\alpha$) of adjustable value entailing a reduction of the yawing moment of the vehicle proportional to the value of this first parameter.

**3.** A method as claimed in claim 2, **characterised in that** the dissymmetry limit is calculated by also taking account of a second parameter ($\beta$) of adjustable value entailing a distribution of the dissymmetry limit of the braking torques between the front and rear wheels of the vehicle.

**4.** A method as claimed in any one of the preceding claims, **characterised in that** the instantaneous vertical load applied to each wheel is evaluated at least from the longitudinal and transverse accelerations of the vehicle, taking account of the static load of the vehicle and the dynamic longitudinal and transverse load transfers.

**5.** A method as claimed in claim 4, **characterised in that** at least one of the longitudinal and transverse accelerations of the vehicle is formed by or derived from a measurement signal supplied by a sensor.

**6.** A method as claimed in any one of claims 4 and 5, **characterised in that** the longitudinal acceleration of the vehicle is estimated from a measurement of the instantaneous speed of the vehicle.

**7.** A method as claimed in any one of claims 4 to 6, **characterised in that** the transverse acceleration of the vehicle is estimated from a measurement of the instantaneous speed of the vehicle and a measurement of an angle of rotation of the steering wheel of this vehicle.

**8.** A method as claimed in any one of claims 6 and 7, **characterised in that** at least one of the longitudinal and transverse accelerations of the vehicle is estimated by means of an observer taking account of the braking reference, producing an estimated value of the acceleration of the vehicle linked to an estimated value of the speed of the vehicle, and correcting the estimated value of the acceleration of the vehicle as a function of a difference between the estimated value and the measured value of the instantaneous speed of the vehicle.

**9.** A method as claimed in claim 5 in conjunction with any one of claims 6 and 7, **characterised in that** at least one of the longitudinal and transverse accelerations of the vehicle is both estimated and measured, and **in that** the estimated and measured values of this acceleration are compared to check the operation of the sensor.

**10.** A method as claimed in any one of the preceding claims, **characterised in that** the instantaneous vertical loads applied to the different wheels of the vehicle are, after evaluation, corrected by means of respective safety coefficients selected to give the braking torques applied to the front wheels priority over the braking torques applied to the rear wheels, and to give the braking torques applied to the inner wheels on a bend priority over the braking torques applied to the outer wheels on this bend.

11. A method as claimed in any one of the preceding claims, **characterised in that** the individual instantaneous braking torques respectively applied to the different wheels of the vehicle are also calculated by taking account of the lateral forces to which these wheels are respectively subject.

12. A method as claimed in any one of the preceding claims in conjunction with claim 5, **characterised in that** at least one of the longitudinal and transverse accelerations of the vehicle is obtained by filtering of the measurement signal supplied by the sensor.

**Patentansprüche**

1. Verfahren zur Steuerung der Verlangsamung eines Fahrzeugs mit mehreren Rädern in Abhängigkeit von einem Bremssollwert ($F_T$), welcher z.B. von einem Fahrer dieses Fahrzeugs ausgeht, wobei dieses Verfahren Operationen umfasst, die darin bestehen, mindestens die vertikale, augenblicklich auf jedes Rad angelegte Last ($F_{Zij}$) in Abhängigkeit von einem augenblicklichen dynamischen Zustand des Fahrzeugs abzuschätzen und auf die Räder des Fahrzeugs jeweils einzelne, augenbliclcliche Bremsmomente anzulegen, welche mindestens eine erste Einschränkung erfüllen, die auferlegt, dass die Summe der einzelnen Bremsmomente dem Bremssollwert entspricht, und eine zweite Einschränkung, die auferlegt, dass das einzelne Bremsmoment, welches auf jedes Rad angelegt wird, einem wachsenden Gesetz in Abhängigkeit von der vertikalen, augenblicklich auf dieses Rad angelegten Last folgt, **dadurch gekennzeichnet, dass** es mindestens eine zusätzliche Operation aufweist, die bedingt während der Verlangsamung des Fahrzeugs in einer Kurve umgesetzt wird und welche darin besteht, dem wachsenden Gesetz eine Höchstgrenze zu setzen durch eine Asymmetriegrenze von Bremsmomenten, welche jeweils auf die bei der Bremsung äußeren Räder des Fahrzeugs und auf die bei der Bremsung inneren Räder des Fahrzeugs angelegt werden.

2. Verfahren nach Anspruch 1, **dadurch gekennzeichnet, dass** die Asymmetriegrenze mittels eines ersten Parameters ($\alpha$) eines regelbaren Werts berechnet wird, der eine Reduzierung des Moments des Schlingerns des Fahrzeugs proportional zu dem Wert dieses ersten Parameters bewirkt.

3. Verfahren nach Anspruch 2, **dadurch gekennzeichnet, dass** die Asymmetriegrenze unter ebenso einem Berücksichtigen eines zweiten Parameters ($\beta$) eines regelbaren Werts berechnet wird, der eine Aufteilung zwischen den vorderen und den hinteren Rädern des Fahrzeugs der Asymmetriegrenze von Bremsmomenten bewirkt.

4. Verfahren nach irgendeinem der vorangegangenen Ansprüche, **dadurch gekennzeichnet, dass** die vertikale, augenblicklich auf jedes Rad angelegte Last mindestens ausgehend von der longitudinalen und der transversalen Beschleunigung des Fahrzeugs abgeschätzt wird unter Berücksichtigung der statischen Last des Fahrzeugs und von Verschiebungen der dynamischen longitudinalen und transversalen Last.

5. Verfahren nach Anspruch 4, **dadurch gekennzeichnet, dass** mindestens eine der Beschleunigungen, die longitudinale und die transversale Beschleunigung, des Fahrzeugs aus einem Messsignal gebildet oder abgeleitet wird, das durch einen Sensor geliefert wird.

6. Verfahren nach irgendeinem der Ansprüche 4 und 5, **dadurch gekennzeichnet, dass** die longitudinale Beschleunigung des Fahrzeugs ausgehend von einer Messung der augenblicklichen Geschwindigkeit des Fahrzeugs geschätzt wird.

7. Verfahren nach irgendeinem der Ansprüche 4 bis 6, **dadurch gekennzeichnet, dass** die transversale Beschleunigung des Fahrzeugs ausgehend von einer Messung der augenblicklichen Geschwindigkeit des Fahrzeugs und einer Messung eines Drehwinkels des Lenkrads dieses Fahrzeugs geschätzt wird.

8. Verfahren nach irgendeinem der Ansprüche 6 und 7, **dadurch gekennzeichnet, dass** mindestens eine der Beschleunigungen, die longitudinale und die transversale Beschleunigung, des Fahrzeugs mittels eines Beobachters unter Berücksichtigung des Bremssollwerts geschätzt wird, wobei ein geschätzter Wert der Beschleunigung des Fahrzeugs erzeugt wird, der mit einem geschätzten Wert der Geschwindigkeit des Fahrzeugs verbunden ist, und wobei der geschätzte Wert der Beschleunigung des Fahrzeugs in Abhängigkeit von einer Differenz zwischen dem geschätzten Wert und dem gemessenen Wert der augenblicklichen Geschwindigkeit des Fahrzeugs korrigiert wird.

**9.** Verfahren nach Anspruch 5 kombiniert mit irgendeinem der Ansprüche 6 und 7, **dadurch gekennzeichnet, dass** mindestens die eine der Beschleunigungen, die longitudinale und die transversale Beschleunigung, des Fahrzeugs gleichzeitig geschätzt und gemessen wird und dass die geschätzten und gemessenen Werte dieser Beschleunigung verglichen werden, um das Funktionieren des Sensors zu überprüfen.

**10.** Verfahren nach irgendeinem der vorangegangenen Ansprüche, **dadurch gekennzeichnet, dass** die vertikalen, augenblicklich auf die verschiedenen Räder des Fahrzeugs angelegten Lasten nach Abschätzung mittels jeweiliger Sicherheitskoeffizienten korrigiert werden, welche ausgewählt sind, um die Bremsmomente, welche auf die vorderen Räder angelegt werden, im Verhältnis zu den Bremsmomenten, die auf die hinteren Räder angelegt werden, zu begünstigen und um die auf die Bremsmomente, welche auf die in einer Kurve inneren Räder angelegt werden, im Verhältnis zu den Bremsmomenten, welche auf die in dieser Kurve äußeren Räder angelegt werden, zu begünstigen.

**11.** Verfahren nach irgendeinem der vorangegangenen Ansprüche, **dadurch gekennzeichnet, dass** die einzelnen, augenblicklich jeweils auf die verschiedenen Räder des Fahrzeugs angelegten Bremsmomente unter auch einem Berücksichtigen der seitlichen Kräfte, welchen diese Räder jeweils ausgesetzt sind, bestimmt werden.

**12.** Verfahren nach irgendeinem der vorangegangenen Ansprüche kombiniert mit Anspruch 5, **dadurch gekennzeichnet, dass** mindestens eine der Beschleunigungen, die longitudinale und die transversale Beschleunigung, des Fahrzeugs durch Filterung des durch den Sensor gelieferten Messsignals erhalten wird.

Consigne
conducteur

Répartition

# Fig. 1

Dispositifs de
sécurité

Véhicule

---

Moment lacet Max Autorisé

Capteurs

1- Traitements des
capteurs, filtrage et
estimations

2- Cohérence
capteurs

$F_T$

$a_c$

$a_i$

3- Estimation des
efforts aux pneus

4- Uniformisation
du potentiel

$F_x$

$\hat{F}_z$

5- Limitation
du moment
de lacet

$F_x$

Signal défaut capteur

# Fig. 2

---

Moment lacet Max Autorisé

Capteurs

1- Traitements des
capteurs, filtrage et
estimations

2- Cohérence
capteurs

$F_T$

$a_c$

$a_i$

$\ddot{\psi}$

3- Estimation des
efforts aux pneus

4- Uniformisation
du potentiel

$F_x$

$\hat{F}_z$

5- Limitation
du moment
de lacet

$F_x$

Signal défaut capteur

# Fig. 3